# EUROPÄISCHE PATENTSCHRIFT

(11) **EP 1 693 285 B1**
(45) Veröffentlichungstag und Bekanntmachung des Hinweises auf die Patenterteilung: **05.11.2008**
(21) Anmeldenummer: 05025384.8
(22) Anmeldetag: 22.11.2005
(51) Int. Cl.: B62D 35/00

(54) **Heckseitige Luftleitvorrichtung für ein Kraftfahrzeug**
Rear spoiler for a motor vehicle
Dispositif aérodynamique à l'arrière d'un véhicule automobile

(30) Priorität: 22.02.2005 DE 102005008001
(43) Veröffentlichungstag der Anmeldung: 23.08.2006
(73) Patentinhaber: Dr. Ing. h.c. F. Porsche Aktiengesellschaft, 70435 Stuttgart (DE)
(72) Erfinder: Roth, Martin, 71277 Rutesheim (DE)

(56) Entgegenhaltungen:
- DE-A1- 3 520 971
- DE-A1- 4 207 658
- DE-A1- 4 305 115

## Beschreibung

Die Erfindung betrifft eine heckseitige Luftleitvorrichtung für ein Kraftfahrzeug gemäß dem Oberbegriff des Anspruchs 1.

Aus der gattungsbildenden DE 42 07 658 C2 geht eine heckseitige Luftleitvorrichtung für ein Kraftfahrzeug hervor, die ein Luftleitprofil aufweist, das gegenüber der Fahrzeugkarosserie zwischen einer eingefahrenen Ruheposition und einer ausgefahrenen Wirkposition verstellbar ist, wobei das Luftleitprofil in der eingefahrenen, bereichsweise die Karosserieaußenhaut bildenden Ruheposition einen anderen Anstellwinkel aufweist als in der ausgefahrenen, mit Abstand zur Karosserieaußenhaut verlaufenden Wirkposition.

Die Halterung und Verstellung des Luftleitprofils erfolgt durch wenigstens ein kinematisches Additionsgetriebe, das eine Schwinge aufweist, deren zur Fahrzeugoberseite weisendes Ende drehbar mit dem Luftleitprofil verbunden ist und deren anderes Ende am Fahrzeugaufbau drehbar gelagert ist. Ferner umfasst das Additionsgetriebe eine mehrgliedrige Gelenkstangenkette, welche mit dem Luftleitprofil und der Schwinge jeweils drehbar verbunden und in einem in seiner Lage verstellbaren Gelenkstangenlager drehbar gelagert ist, und jeweils einen Antrieb für die Schwinge und die Gelenkstangenkette.

Dieser Anordnung haftet der Nachteil, dass die Einrichtung zur Halterung und Verstellung des Luftleitprofils einen aufwendigen, aus einer Vielzahl von Bauteilen bestehenden Aufbau aufweist, der hohe Kosten verursacht und relativ viel Bauraum im Heckbereich des Kraftfahrzeuges beansprucht.

Aufgabe der Erfindung ist es, eine Einrichtung zur Halterung und Verstellung des Luftleitprofils einer Luftleitvorrichtung so weiterzubilden, dass sie einen vereinfachten Aufbau aufweist, kostengünstig herstellbar ist und wenig Bauraum beansprucht.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass durch die gelenkige Anbindung des Luftleitprofils an zumindest einer in aufrechter Richtung verstellbaren Stütze, die Anordnung eines Federelementes zwischen Luftleitprofil und Stütze sowie durch die Auflagebereiche an den Stützen und die versenkte Aufnahme an der Fahrzeugkarosserie ein selbsttätiges Verstellen des Luftleitprofils beim Ein- und Ausfahren der Stützen erfolgt, wobei diese Kinematik einen vereinfachten Aufbau mit wenig Bauteilen aufweist, kostengünstig herstellbar ist und wenig Bauraum beansprucht.

Ein Ausführungsbeispiel der Erfindung wird anhand der Zeichnungen näher erläutert. Es zeigt
- Fig. 1: eine perspektivische Teilansicht von schräg hinten auf den Heckbereich eines Kraftfahrzeuges mit einer Luftleitvorrichtung in ausgefahrener Wirkstellung,
- Fig. 2: einen Schnitt nach der Linie ∥-∥ der Fig. 1, wobei in durchgezogenen Linien die eingefahrene Ruheposition und in gestrichelten Linien die ausgefahrene Wirkposition der heckseitigen Luftleitvorrichtung dargestellt ist und
- Fig. 3: einen Schnitt entsprechend Fig. 2 durch das Luftleitprofil mit den im Fahrbetrieb wirkenden aerodynamischen Kräften.

Ein durch einen Sportwagen gebildetes Kraftfahrzeug 1 weist in einem Heckbereich 2 eine Luftleitvorrichtung 3 mit einem flügelartigen Luftleitprofil 4 auf, das gegenüber einer angrenzenden Fahrzeugkarosserie 5 zwischen einer eingefahrenen, bereichsweise die Karosserieaußenhaut 6 bildenden Ruheposition A und einer ausgefahrenen, mit Abstand zur Karosserieaußenhaut 6 verlaufenden Wirkposition B verstellbar ist.

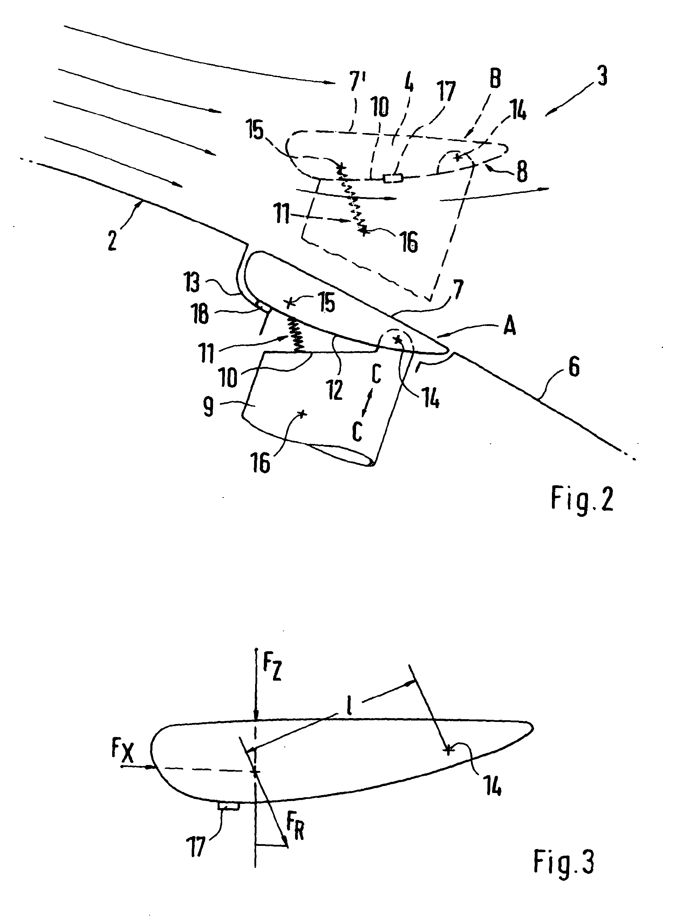

In der eingefahrenen Ruheposition A verläuft die Außenseite 7 des Luftleitprofils 4 außenhautbündig zu vorgelagerten und nachgelagerten Abschnitten der fließheckartig abfallenden Fahrzeugkarosserie 5 und weist einen anderen Anstellwinkel auf als in der ausgefahrenen Wirkstellung B. In der Wirkstellung B ist das Luftleitprofil 4 derart angestellt, dass die obenliegende Außenseite 7' des Luftleitprofils 4 entweder horizontal oder leicht nach hinten ansteigend angeordnet ist (Fig. 2).

Zur Halterung und Verstellung des Luftleitprofils 4 ist eine Einrichtung 8 vorgesehen. Erfindungsgemäß umfasst die Einrichtung 8 zumindest eine an der Fahrzeugkarosserie 5 gelagerte, in aufrechter Richtung C-C bewegbare Stütze 9, die an ihrem oberen Endbereich zumindest örtlich einen Auflagebereich 10 für das drehbar an der Stütze 9 gelagerte Luftleitprofil 4 aufweist. Das Luftleitprofil 4 liegt in der ausgefahrenen Wirkposition B bereichsweise am Auflagebereich 10 auf und ist durch ein Federelement 11 in dieser Stellung gehalten. In der eingefahrenen Ruheposition A wird das Luftleitprofil 4 gegen die Wirkung des Federelementes 11 verschwenkt und stützt sich dabei mit seiner Unterseite 12 bereichsweise an einer versenkten Aufnahme 13 der Fahrzeugkarosserie 5 ab.

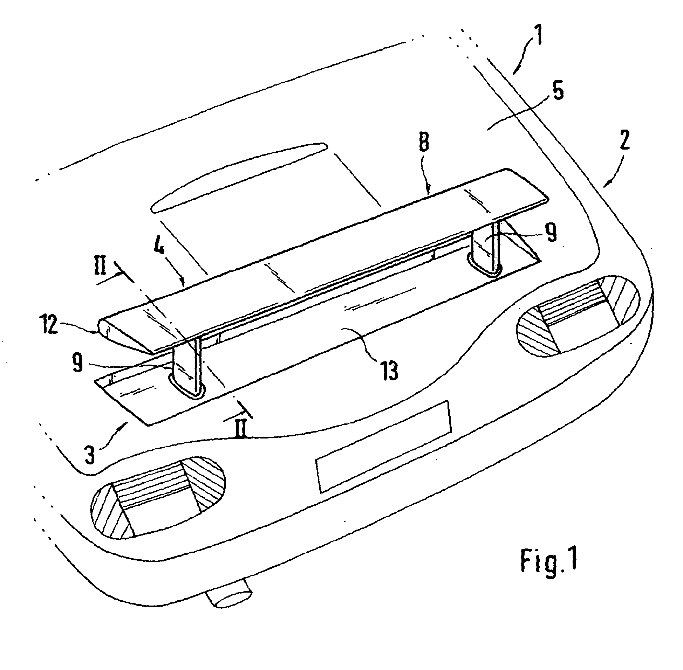

Im Ausführungsbeispiel sind zur Verstellung und Halterung des Luftleitprofils 4 zwei mit Abstand zueinander angeordnete verstellbare Stützen 9 vorgesehen (Fig. 1). Im Querschnitt gesehen sind die hohlkörperartigen Stützen 9 oval, kreisförmig oder dergleichen ausgebildet, wobei die Oberseite der Stützen 9 bereichsweise geschlossen ausgebildet sein kann. Die Stützen 9 wirken an ihrem unteren Endbereich in nicht näher dargestellter Weise mit einer herkömmlicher Antriebsvorrichtung zusammen, dergestalt dass eine geradlinige oder bogenförmige Ein- und Ausfahrbewegung der Stützen 9 in aufrechter Richtung C-C gewährleistet ist.

Das Luftleitprofil 4 ist im Ausführungsbeispiel in einem hintenliegenden Bereich seiner Längserstreckung um eine querverlaufende, etwa horizontal ausgerichtete Drehachse 14 mit einem oberen Endbereich jeder Stütze 9 drehbar verbunden. Mit Abstand zur Drehachse 14 des Luftleitprofils 4 verläuft ein etwa aufrecht ausgerichtetes Federelement 11, dessen eines Ende 15 mit dem Luftleitprofil 4 und dessen anderes Ende 16 mit der Stütze 9 verbunden ist. In der Wirkstellung B zieht das Federelement 11 das Luftleitprofil 4 nach unten in Richtung Stütze 9. Gemäß Fig. 2 liegt das obere Ende 15 des Federelementes 11 in Längsrichtung gesehen etwas weiter vorne als das hintere Ende 16. Das Federelement 11 wird durch eine Zugfeder, eine Schenkelfeder, eine Drehstabfeder in Achse 14 oder dergleichen gebildet.

Um in der ausgefahrenen Wirkstellung B Geräusche zwischen dem Luftleitprofil und den Stutzen 9 zu vermeiden, sind an jeder Stütze 9 und/oder am Luftleitprofil 4 im Auflagebereich 10 für das Luftleitprofil 4 zwischengeschaltete Auflageelemente 17 angeordnet, die beispielsweise aus einem geeigneten Kunststoff oder Gummi gefertigt sind. In der eingefahrenen Wirkstellung A wird eine Geräuschbildung zwischen dem Luftleitprofil 4 und der angrenzenden Fahrzeugkarosserie 5 dadurch vermieden, dass weitere Auflageelemente 18 zwischen der versenkten Aufnahme 13 und dem Luftleitprofil 4 zwischengeschaltet sind.

Die Verstellbewegung des Luftleitprofils 4 von der außenhautbündigen Ruheposition A in die angestellte Wirkposition B erfolgt in einer Anfangsphase der Ausfahrbewegung der beiden Stützen 9, wogegen die Verstellbewegung des Luftleitprofils 4 von der Wirkposition B in die Ruheposition A erst in einer Endphase der Einfahrbewegung beider Stützen 9 stattfindet.

Die Drehachse 14 und der Auflagebereich 10 sind vertikal so angeordnet, dass im Fahrbetrieb die aerodynamische Kraftresultierende F_{R} ein Moment in Auflagerichtung erzeugt (M_{Halte} = F_{R} X L).

## Patentansprüche

1. Heckseitige Luftleitvorrichtung (3) für ein Kraftfahrzeug, mit einem Luftleitprofil (4), das gegenüber der Fahrzeugkarosserie (5) zwischen einer eingefahrenen Ruheposition (A) und einer ausgefahrenen Wirkposition (B) verstellbar ist, wobei das Luftleiprofil (4) in der eingefahrenen, bereichsweise die Karosserieaußenhaut bildenden Ruheposition (A) einen anderen Anstellwinkel aufweist als in der ausgefahrenen, mit Abstand zur Karosserieaußenhaut (6) verlaufenden Wirkposition (B) und das zur Halterung und Verstellung des Luftleitprofils (4) eine Einrichtung (8) vorgesehen ist, **dadurch gekennzeichnet, dass** die Einrichtung (8) zumindest eine an der Fahrzeugkarosserie (5) verschiebbar gelagerte, in aufrechter Richtung (C-C) bewegbare Stütze (9) umfasst, die an ihren oberen Endbereich einen Auflagebereich (10) für das drehbar an der Stütze (9) gelagerte Luftleitprofil (4) aufweist, wobei das Luftleitprofil (4) in der ausgefahrenen Wirkposition (B) bereichsweise am Auflagebereich (10) der Stütze (9) aufliegt und durch ein Federelement (11) in dieser Stellung gehalten ist, wogegen das Luftleitprofil (4) in der eingefahrenen Ruheposition (A) gegen die Wirkung des Federelementes (11) verschwenkt wird und sich mit seiner Unterseite (12) an der Fahrzeugkarosserie (5) abstützt.

2. Heckseitige Luftleitvorrichtung nach Anspruch 1, **dadurch gekennzeichnet, dass** zur Halterung und Verstellung des Luftleitprofils (4) zwei mit Abstand zueinander angeordnete verstellbare Stützen (9) vorgesehen sind.

3. Heckseitige Luftleitvorrichtung nach den Ansprüchen 1 oder 2, **dadurch gekennzeichnet, dass** jede drehbare Lagerung zwischen der Stütze (9) und dem Luftleitprofil (4) vorzugsweise an einem in Fahrzeuglängsrichtung gesehen vorne oder hinten liegenden Endbereich des Luftleitprofils (4) vorgesehen ist und eine sich in Fahrzeugquerrichtung verlaufende, etwa horizontal ausgerichtete Drehachse (14) umfasst.

4. Heckseitige Luftleitvorrichtung nach einem der vorangegangenen Ansprüche, **dadurch gekennzeichnet, dass** das Federelement (11) mit Abstand zur Drehachse (14) des Luftleitprofils (4) verläuft, wobei ein Ende (15) des Federelementes (11) mit dem Luftleitprofil (4) und das andere Ende (16) mit der Stütze (9) verbunden ist.

5. Heckseitige Luftleitvorrichtung nach einem der vorangegangenen Ansprüche, **dadurch gekennzeichnet, dass** das Federelement (11) durch eine Zugfeder, eine Schenkelfeder, eine Drehstabfeder oder dergleichen gebildet wird.

6. Heckseitige Luftleitvorrichtung nach einem der vorangegangenen Ansprüche, **dadurch gekennzeichnet, dass** an jeder Stütze (9) oder am Luftleitprofil (4) im Auflagebereich (10) für das Luftleitprofil (4) ein Auflageelement (17) zwischengeschaltet ist.

7. Heckseitige Luftleitvorrichtung nach einem der vorangegangenen Ansprüche, **dadurch gekennzeichnet, dass** in einer karosserieseitig versenkten Aufnahme (13) für das Luftleitprofil (4) zumindest ein weiteres Auflageelement (18) zwischengeschaltet ist.

8. Heckseitige Luftleitvorrichtung nach Anspruch 3, **dadurch gekennzeichnet, dass** die drehbare Lagerung zwischen der Stütze (9) und dem Luftleitprofil (4) in einem hintenliegenden Endbereich des Luftleitprofils (4) angeordnet ist.

9. Heckseitige Luftleitvorrichtung nach einem der vorangegangenen Ansprüche, **dadurch gekennzeichnet, dass** die Drehachse (14) des Luftleitprofils (4) und der Auflagebereich (10) vertikal so angeordnet sind, dass die aerodynamische Kraftresultierende (F_{R}) ein Moment in Auflagerichtung erzeugt.

## Claims

1. Rear spoiler (3) for a motor vehicle, with an air-guiding profile (4) which can be adjusted in relation to the vehicle body (5) between a retracted inoperative position (A) and an extended operative position (B), wherein the air-guiding profile (4) has a different positioning angle in the retracted inoperative position (A), which in some regions forms the outer skin of the vehicle body, than in the extended operative position (B) which runs at a distance from the outer skin (6) of the vehicle body, and wherein a device (8) is provided for holding and adjusting the air-guiding profile (4), **characterized in that** the device (8) comprises at least one support (9) which is mounted displaceably on the vehicle body (5), is movable in a vertical direction (C-C) and, at its upper end region, has a supporting region (10) for the air-guiding profile (4) which is mounted rotatably on the support (9), the air-guiding profile (4), in the extended operative position (B), resting in some regions on the supporting region (10) of the support (9) and being held in this position by means of a spring element (11), whereas the air-guiding profile (4), in the retracted inoperative position (A), is pivoted counter to the action of the spring element (11) and is supported with its lower side (12) on the vehicle body (5).

2. Rear spoiler according to Claim 1, **characterized in that** two adjustable supports (9) arranged at a distance from each other are provided in order to hold and adjust the air-guiding profile (4).

3. Rear spoiler according to Claim 1 or 2, **characterized in that** each rotatable mounting between the support (9) and the air-guiding profile (4) is preferably provided on an end region of the air-guiding profile (4), which end region is located at the front or rear, as seen in the longitudinal direction of the vehicle, said rotatable mounting comprising a fulcrum (14) which runs in the transverse direction of the vehicle and is oriented approximately horizontally.

4. Rear spoiler according to one of the preceding claims, **characterized in that** the spring element (11) runs at a distance from the fulcrum (14) of the air-guiding profile (4), with one end (15) of the spring element (11) being connected to the air-guiding profile (4) and the other end (16) to the support (9).

5. Rear spoiler according to one of the preceding claims, **characterized in that** the spring element (11) is formed by a tension spring, a leg spring, a torsion spring or the like.

6. Rear spoiler according to one of the preceding claims, **characterized in that** a supporting element (17) is inserted on each support (9) or on the air-guiding profile (4) in the supporting region (10) for the air-guiding profile (4).

7. Rear spoiler according to one of the preceding claims, **characterized in that** at least one further supporting element (18) is inserted in a receptacle (13) which is recessed on the vehicle body and is intended for the air-guiding profile (4).

8. Rear spoiler according to Claim 3, **characterized in that** the rotatable mounting between the support (9) and the air-guiding profile (4) is arranged in an end region of the air-guiding profile (4), which end region is located at the rear.

9. Rear spoiler according to one of the preceding claims, **characterized in that** the fulcrum (14) of the air-guiding profile (4) and the supporting region (10) are arranged vertically in such a manner that the aerodynamic resultant force (F_{R}) produces a moment in the supporting direction.

## Revendications

1. Déflecteur d'air arrière (3) pour un véhicule automobile, comprenant un profilé de déflecteur d'air (4) qui peut être déplacé par rapport à la carrosserie du véhicule (5) entre une position de repos rentrée (A) et une position active sortie (B), le profilé de déflecteur d'air (4) présentant, dans la position de repos rentrée (A) formant en partie la tôle extérieure de la carrosserie, un autre angle d'inclinaison que dans la position active sortie (B) s'étendant à distance de la tôle extérieure de la carrosserie (6), et un dispositif (8) étant prévu pour fixer et déplacer le profilé de déflecteur d'air (4), **caractérisé en ce que** le dispositif (8) comprend au moins un support (9) monté de manière déplaçable sur la carrosserie du véhicule (5), mobile dans la direction verticale (C-C), qui présente, au niveau de sa région d'extrémité supérieure, une région d'appui (10) pour le profilé de déflecteur d'air (4) monté à rotation sur le support (9), le profilé de déflecteur d'air (4) s'appliquant dans la position active sortie (B) en partie contre la région d'appui (10) du support (9) et étant maintenu dans cette position par un élément de ressort (11), tandis que dans la position de repos rentrée (A), le profilé de déflecteur d'air (4) est pivoté à l'encontre de l'action de l'élément de ressort (11) et s'appuie avec son côté inférieur (12) contre la carrosserie du véhicule (5).

2. Déflecteur d'air arrière selon la revendication 1, **caractérisé en ce que** pour la fixation et le déplacement du profilé de déflecteur d'air (4), on prévoit deux supports (9) déplaçables disposés à distance l'un de l'autre.

3. Déflecteur d'air arrière selon l'une quelconque des revendications 1 ou 2, **caractérisé en ce que** chaque appui rotatif entre le support (9) et le profilé de déflecteur d'air (4) est prévu de préférence au niveau d'une région d'extrémité du profilé de déflecteur d'air (4) située en avant ou en arrière, vue dans la direction longitudinale du véhicule, et comprend un axe de rotation (14) s'étendant dans la direction transversale du véhicule, orienté approximativement horizontalement.

4. Déflecteur d'air arrière selon l'une quelconque des revendications précédentes, **caractérisé en ce que** l'élément de ressort (11) s'étend à distance de l'axe de rotation (14) du profilé de déflecteur d'air (4), une extrémité (15) de l'élément de ressort (11) étant connectée au profilé de déflecteur d'air (4) et l'autre extrémité (16) étant connectée au support (9).

5. Déflecteur d'air arrière selon l'une quelconque des revendications précédentes, **caractérisé en ce que** l'élément de ressort (11) est formé par un ressort de traction, un ressort à branches, un ressort de torsion ou similaire.

6. Déflecteur d'air arrière selon l'une quelconque des revendications précédentes, **caractérisé en ce qu'**un élément d'appui (17) est interposé sur chaque support (9) ou sur le profilé de déflecteur d'air (4) dans la région d'appui (10) pour le profilé de déflecteur d'air (4).

7. Déflecteur d'air arrière selon l'une quelconque des revendications précédentes, **caractérisé en ce qu'**au moins un autre élément d'appui (18) est interposé dans un logement (13) renfoncé du côté de la carrosserie pour le profilé de déflecteur d'air (4).

8. Déflecteur d'air arrière selon la revendication 3, **caractérisé en ce que** l'appui rotatif entre le support (9) et le profilé de déflecteur d'air (4) est disposé dans une région d'extrémité arrière du profilé de déflecteur d'air (4).

9. Déflecteur d'air arrière selon l'une quelconque des revendications précédentes, **caractérisé en ce que** l'axe de rotation (14) du profilé de déflecteur d'air (4) et la région d'appui (10) sont disposés verticalement de telle sorte que la résultante des forces aérodynamiques (F_{R}) produise un couple dans la direction d'appui.
